Europäisches Patentamt

European Patent Office

Office européen des brevets

(19)

(11) Veröffentlichungsnummer: **0 054 871**
**B1**

(12) ## EUROPÄISCHE PATENTSCHRIFT

(45) Veröffentlichungstag der Patentschrift:
**11.07.84**

(51) Int. Cl.³: **C 13 K 1/02, B 65 G 19/14**

(21) Anmeldenummer: **81110389.4**

(22) Anmeldetag: **12.12.81**

(54) **Verfahren zur Hydrolyse von Zellulose pflanzlicher Rohstoffe zu Glukose und Vorrichtung zur Durchführung des Verfahrens.**

(30) Priorität: **23.12.80 DE 3048802**

(43) Veröffentlichungstag der Anmeldung:
**30.06.82 Patentblatt 82/26**

(45) Bekanntmachung des Hinweises auf die Patenterteilung:
**11.07.84 Patentblatt 84/28**

(84) Benannte Vertragsstaaten:
**AT CH DE FR GB IT LI NL SE**

(56) Entgegenhaltungen:
**FR - A - 1 007 263**
**FR - A - 1 007 264**
**US - A - 2 357 651**
**US - A - 2 559 616**

(73) Patentinhaber: **Werner & Pfleiderer,
Theodorstrasse 10 Postfach 30 12 20,
D-7000 Stuttgart 30 (DE)**

(72) Erfinder: **Hinger, Klaus-Jürgen, Dr. Ing., Im Unteren
Kienle 12, D-7000 Stuttgart 1 (DE)**

(74) Vertreter: **Rau, Manfred, Dr. Dipl.-Ing.,
Postfach 91 04 80 Lange Zeile 30,
D-8500 Nürnberg 91 (DE)**

## Beschreibung

Die Erfindung betrifft ein Verfahren nach dem Oberbegriff des Patentanspruches 1 und eine Vorrichtung zur Durchführung dieses Verfahrens.

Da die Energievorräte der Erde, insbesondere die Vorräte an Erdöl und Erdgas, knapper werden, gewinnt die Verwertung von organischen Abfallstoffen und von regenerativen Rohstoffen, wie Holz, Stroh und anderen landwirtschaftlichen Produkten, zunehmend an Bedeutung.

So wird seit geraumer Zeit wieder an Verfahren zur Holzverzuckerung durch Hydrolyse von Zellulose zu Glukose gearbeitet, weil aus Glukose wieder Äthanol hergestellt werden kann, das wiederum Ottokraftstoff und Dieselkraftstoff zugesetzt werden kann. Derartige Holzverzuckerungsverfahren, insbesondere nach der in der DE-C-577 850 geschilderten Art, wurden bis zum Ende des Zweiten Weltkrieges und in neuerer Zeit noch in geringerem Umfang grosstechnisch eingesetzt.

Aus dem Zeitschriftenartikel von Hans E. Grethlein in der Zeitschrift «Biothechnology and Bioengineering», Vol. XX (1978), Seiten 503 bis 525 «Comparison of the Economics of Acid and Enzymatic Hydrolysis of Newsprint» ist es aufgrund theoretischer Untersuchungen bekannt, dass eine hohe Ausbeute an Glukose bezogen auf die eingesetzte α-Zellulose erreicht wird, wenn die Hydrolysetemperaturen über 250 °C bis auf 300 °C bei Drücken von 40 bis 90 bar gesteigert werden und wenn verdünnte Schwefelsäure mit einer Konzentration bis zu 2,0% eingesetzt werden und wenn die Hydrolysezeit extrem kurz, bis zu 0,03 s. bemessen wird.

Derartige Hydrolysebedingungen konnten bisher technisch nicht realisiert werden.

Aus der DE-B-16 42 534 ist es bekannt, zellulosehaltige Rohstoffe zu Staubkorngrösse zu zerkleinern und mit Wasser und verdünnter Schwefelsäure zu versetzen, bis ein pumpfähiges Gemisch entsteht. Dieses pumpfähige Gemisch wird mittels einer Suspensionspumpe durch ein Rohrsystem mit verschiedenen Abschnitten gepumpt, wobei die Suspension zuerst in einem Wärmeübertrager indirekt über Heizflächen auf Hydrolysetemperatur aufgeheizt wird. In einem thermisch isolierten Reaktionsbehälter erfolgt dann eine Hydrolyse während einer Verweilzeit von bis zu 6 Minuten. Im Anschluss daran wird das hydrolisierte Produkt in einem Wärmeübertrager gekühlt. Ausserdem muss der Druck im System geregelt werden. Diese bekannte Vorrichtung und dieses bekannte Verfahren ist nicht geeignet, sehr kurze Verweilzeiten zu ermöglichen, so dass auch die erzielbaren Glukoseausbeuten nicht hoch sind. Ausserdem ist der spezifische Energieeinsatz sehr hoch, weil das gesamte Wasser der Suspension auf Hydrolysetemperatur aufgeheizt werden muss. Die Suspensionspumpe muss die gesamte mechanische Förderarbeit in die Hochdruckzone leisten, die bei der Entspannung im Regelventil völlig vernichtet wird. Eine Wärmerückgewinnung ist nur in sehr beschränktem Masse möglich.

Aus der DE-A-29 44 789 ist ein prinzipiell ähnliches Verfahren mit einer ähnlichen Vorrichtung bekannt, bei der die Aufheizung durch Dampfinjektionen erfolgt. Die geschilderten Nachteile sind hierbei prinzipiell die gleichen.

Aus den DE-C-15 67 350 und DE-C-15 67 335 sind Perkolator-Festbettreaktoren für eine halbkontinuierliche Hydrolyse bekannt, wobei schubweise verdünnte Schwefelsäure über ein Festbett aus Holzschnitzeln rieselt und wobei bei einer Hydrolysetemperatur von 120 °C bis 145 °C und einer Verweilzeit von 15 bis 60 Minuten Zellulose zu Glukose mit einer Ausbeute von ca. 50% umgesetzt wird. Neben der relativ ungünstigen Glukoseausbeute ist ein hoher spezifischer Einsatz erforderlich.

Aus der FR-A-1 007 263 ist ein diskontinuerliches Verfahren bekannt, bei welchem die Hydrolyse dadurch vorgenommen wird, dass das Rohmaterial auf Temperaturen von über 300 °C mittels Hochdruck-Dampf für eine Zeitdauer von 20 bis 30 Min. aufgeheizt wird.

Aus der FR-A-1 007 264 ist ein Verfahren bekannt, bei welchem das Rohmaterial in einem Hochdruck-Autokalven bei sehr hohen Drucken während einiger Sekunden behandelt wird. Die Verwendung dieser hohen Drucke macht den Einsatz eines solchen Hochdruck-Autoklaven zwingend erforderlich, wodurch wiederum ein derartiges Verfahren nicht kontinuierlich oder quasi-kontinuierlich durchgeführt werden kann.

Der Erfindung liegt die Aufgabe zugrunde, ein Verfahren und eine Vorrichtung der gattungsgemässen Art zu schaffen, womit Glukoseausbeuten von 60 bis 90% bei niedrigem spezifischem Energieeinsatz und geringem technischem Aufwand ermöglicht werden.

Diese Aufgabe wird bei einem Verfahren der gattungsgemässen Art im wesentlichen durch die kennzeichnenden Merkmale des Patentanspruches 1 gelöst. Wesentlich für das erfindungsgemässe Verfahren ist also, dass die Aufheizung und Druckerhöhung des zu hydrolysierenden Rohstoffes in extrem kurzer Zeit erfolgt, so dass insgesamt die angestrebte extrem kurze Verweilzeit als optimale Hydrolysezeit erreicht wird. Die extrem kurzen Aufheizzeiten werden insbesondere durch die Massnahmen nach Anspruch 2 erreicht und gefördert, da durch das Einblasen des Sattdampfes in die Hydrolyse eine gute Durchwirbelung und damit ein guter Wärmeübergang und durch die Kondensation des Sattdampfes weiterhin ebenfalls maximale Wärmeübergangszahlen erreicht werden. Hiermit sind Hydrolysetemperaturen bis zu 300 °C und entsprechend dem Sattdampfdruck bei dieser Temperatur von etwa 90 bar die entsprechenden Drücke und damit auch Verweilzeiten von weniger als 1 s bis zu 0,03 s in der Hydrolysezone möglich.

Das erfindungsgemässe Verfahren ermöglicht es in Weiterbildung gemäss Anspruch 4 in sehr einfacher Weise, unmittelbar hinter der Hydrolysezone eine sehr schnelle Temperatur- und Druckabsenkung vorzunehmen, so dass keine weitere Reaktion mehr erfolgt.

Diese Massnahmen wiederum ermöglichen eine Minimierung des spezifischen Energieeinsatzes, da der zur Temperatur- und Druckabsenkung entnommene Dampf gemäss den Massnahmen nach Anspruch 5 wiederum vor der Hydrolyse zur Vorwärmung des zu hydrolysierenden Rohstoffes eingesetzt wird. Auf diese Weise lässt sich erreichen, dass der zu hydrolisierende Rohstoff etwa parabolisch ansteigenden Wasserdampfdrücken und -temperaturen ausgesetzt wird, für extrem kurze Zeit auf dem Temperatur- und Druckmaximum in der Hydrolysezone gehalten und dann sofort wieder unter Druckabsenkung abgekühlt wird.

Die Ansprüche 6 und 7 geben vorteilhafte Weiterbildungen des Verfahrens an.

Die erfindungsgemässe Vorrichtung ist durch die Merkmale des Patentanspruches 8 gekennzeichnet. Kolbenkettenförderer sind seit langem bekannt; sie wurden bereits im Altertum zur Wasserförderung eingesetzt. Es ist weiterhin bekannt, Kolbenkettenförderer zum Eintrag von Kohle in einen Kohlevergasungsreaktor einzusetzen, der unter einem Druck von 40 bis 80 bar steht. Bei dieser Förderung von Kohle gegen den Gasdruck aus einer Reaktionszone darf praktisch keine Gasleckage zwischen Rohr-Innenwand und Kolben auftreten. Ausserdem müssen zusätzliche aufwendige Massnahmen getroffen werden, um Gasleckagen nach der Kohleaustragszone zu minimieren.

Durch die erfindungsgemässe Ausgestaltung wird dagegen eine gezielte Dampf-Leckage in Förderrichtung und entgegen der Förderrichtung ermöglicht, wodurch einerseits das Vorwärmen und andererseits das Abkühlen bewirkt wird. Durch diese Massnahmen wird die gesamte Kolbenkette einerseits gespannt und als im Rohr befindliches Gesamtsystem praktisch druckausgeglichen gemacht, so dass die erforderliche Antriebsenergie sehr klein ist. Diese Massnahmen führen aufgrund der gesteuerten Dampf-Leckage durch Leck-Spalte zwischen Kolben und Rohr-Innenwand zu erheblichen Energieeinsparungen.

Die Massnahmen nach Anspruch 9 unterstützen diese Massnahmen, und zwar insbesondere im Hinblick auf die Energieeinsparung, in erheblichem Umfang. Dieses System einer symmetrischen Dampf-Entnahme und Rückführung gegen die Förderrichtung wird durch die Massnahmen nach Anspruch 10 optimiert.

Die Merkmale des Anspruches 11 führen dazu, dass die Kolben in bezug auf die Rohr-Innenwand eine das Material abhebende Wirkung haben, wodurch wiederum hohe Transportreibung oder gar Verklemmungen oder Verkeilungen ausgeschlossen sind.

Weitere Vorteile und Merkmale der Erfindung ergeben sich aus der nachfolgenden Beschreibung eines Ausführungsbeispiels anhand der Zeichnung. In der Zeichnung zeigt

Fig 1 den reaktionskinetischen Zusammenhang zwischen der Ausbeute an Glukose aus α-Zellu-lose in Abhängigkeit von Hydrolyse-Temperatur, -Druck, -Säurekonzentration und -Verweilzeit,

Fig. 2 eine schematische Darstellung einer Vorrichtung nach der Erfindung,

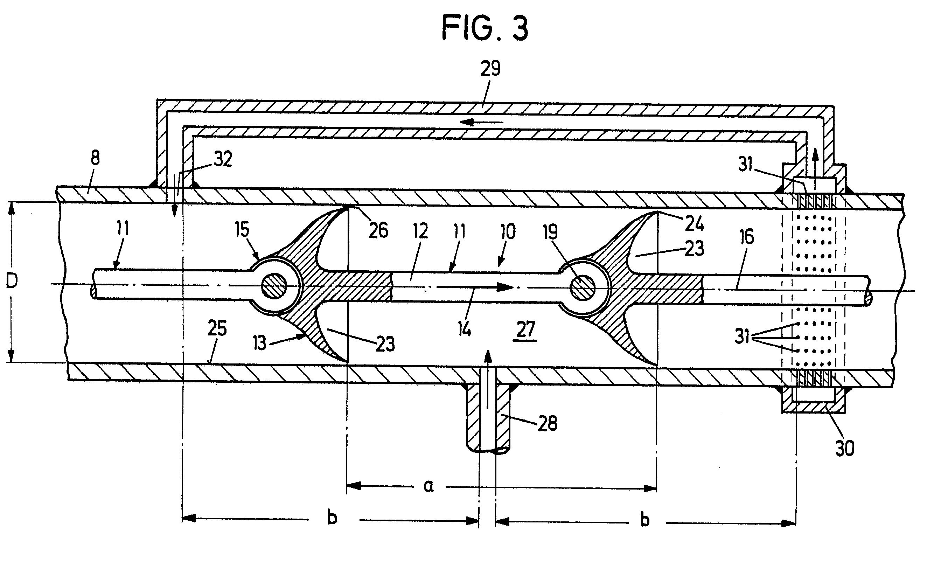

Fig. 3 einen Teilausschnitt aus Fig. 2 in vergrössertem Massstab und genauerer Detaillierung,

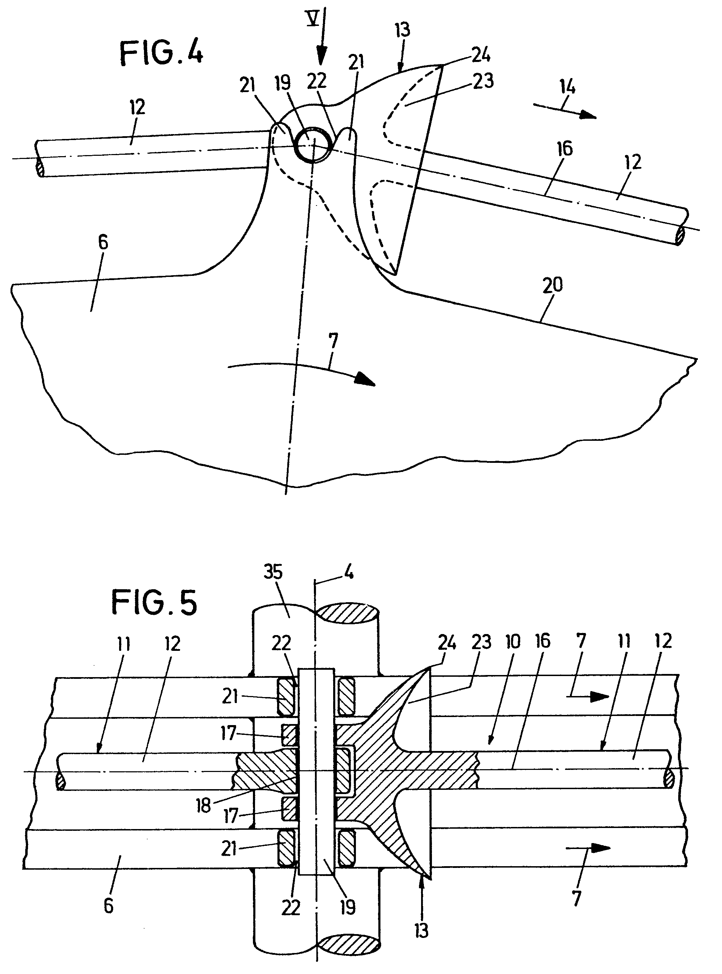

Fig. 4 einen weiteren Teilausschnitt aus Fig. 2 in vergrössertem Massstab und genauerer Detaillierung,

Fig. 5 eine Draufsicht auf den Teilausschnitt gemäss dem Sichtpfeil V in Fig. 4,

Fig. 6 den Temperaturverlauf über dem Förderweg des zu hydrolysierenden Stoffes in der Vorrichtung nach Fig. 2,

Fig. 7 den Verlauf des Hydrolysedrucks über dem Förderweg,

Fig. 8 einen Teilausschnitt aus Fig. 2 in vergrössertem Massstab für die Material-Eingabe in einer Ausgestaltung für rieselförmiges Material,

Fig. 9 eine Vaiante der Material-Eingabe für nichtrieselförmiges Material und

Fig 10 einen Teilausschnitt aus Fig. 2 in vergrössertem Massstab betreffend den Material-Austrag.

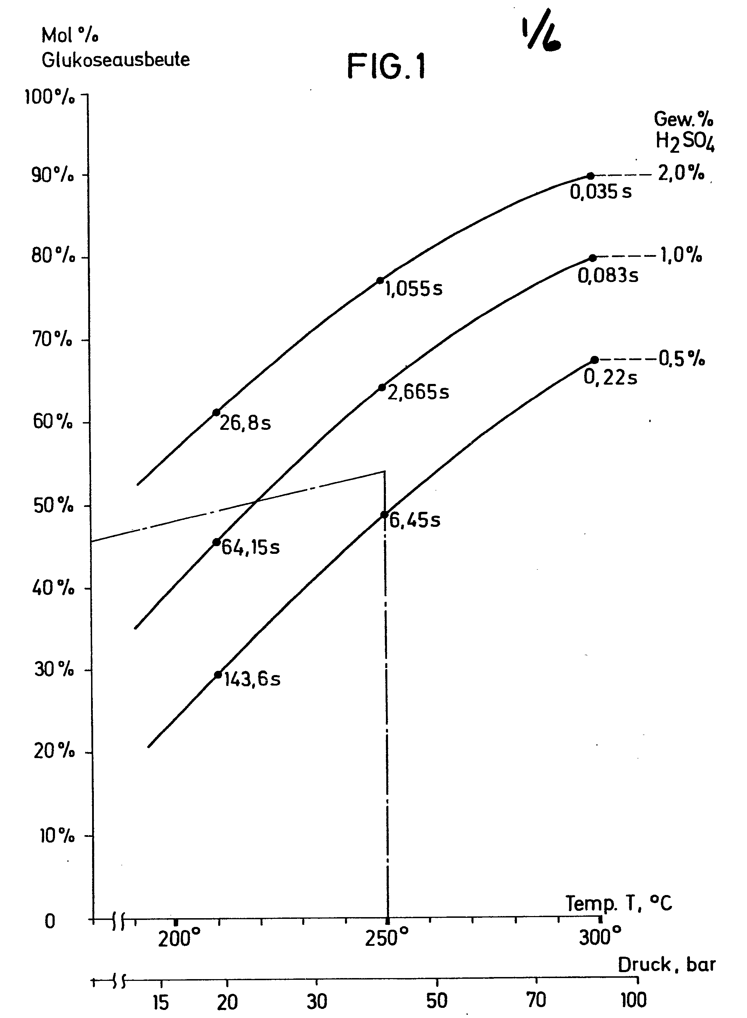

Bevor nachfolgend das Verfahren und die Vorrichtung gemäss der Erfindung erläutert wird, sei vorab das Diagramm nach Fig. 1 erläutert, das aus der eingangs erwähnten Veröffentlichung von Grethlein abgeleitet wurde. Es zeigt, dass die Ausbeute an Glukose aus α-Zellulose mit zunehmender Hydrolysetemperatur und zunehmendem Hydrolysedruck steigt. Weiterhin steigt die Ausbeute mit zunehmender Konzentration der als Katalysator eingesetzten verdünnten Schwefelsäure, und zwar bis zu einer Konzentration von 2,0 Gew.-% $H_2SO_4$. Andererseits ist mit dieser Steigerung der erwähnten Parameter verbunden eine extreme Verkürzung der otimalen Hydrolysezeit. Während der strich-punktiert umrandete Bereich bisher bereits technisch realisierbar war, war der übrige Bereich, in dem Glukoseausbeuten deutlich oberhalb von 50% erreichbar sind, technisch nicht realisierbar.

Wie die Zeichnung zeigt, handelt es sich bei der Vorrichtung nach der Erfindung um einen Rohrreaktor 1, der in einem weitgehend geschlossenen Gehäuse angeordnet sein kann. Dieser Rohrreaktor weist um parallel zueinander angeordnete Drehachsen 3, 4 drehbar gelagerte Kettenräder 5, 6 auf, von denen mindestens eines, nämlich das Kettenrad 6, drehantreibbar ist, so dass beide Kettenräder 5, 6 im gleichen Drehsinn entsprechend dem Drehrichtungspfeil 7 gedreht werden. Parallel zueinander und zwar jeweils etwa in der den beiden Kettenräder 5, 6 gemeinsamen Tangentialebene sind ein oberes Rohr 8 und ein unteres Rohr 9 angeordnet, durch die eine über die Kettenräder 5, 6 geführte endlose Kolbenkette 10 ziehbar ist.

Diese Kolbenkette 10 besteht aus einzelnen Kettengliedern 11, die jeweils aus einer Stange 12 und einem einstückig mit dieser ausgebildeten Kolben 13 bestehen. Die einzelnen Kettenglieder 11 sind gelenkig miteinander verbunden, wozu jeweils auf der – bezogen auf die Förderrichtung 14 – hinteren Seite jedes Kolbens ein Gelenk 15 vorgesehen ist. Die Kettenglieder 11 sind bezogen auf die Mittel-Längsachse 16 des jeweiligen Rohres 8, 9 symmetrisch angeordnet, so dass auch die Ablenkung in dieser Mittel-Längsachse 16 liegt. An der erwähnten Rückseite jedes Kolbens 13 sind im Abstand voneinander, aber symmetrisch zur Mittel-Längsachse 16 zwei Wangen 17 ausgebildet, zwischen denen ein am zugeordneten freien Ende der Stange 12 des nächstfolgenden Kettengliedes 11 ausgebildetes Auge 18 angeordnet wird. In den Wangen 17 und dem Auge 18 sind miteinander fluchtende Bohrungen ausgebildet, durch die ein beidseitig über die Wangen 17 hinausstehender Gelenkbolzen 19 angeordnet wird. Die Bohrungen sind so dimensioniert, dass der Gelenkbolzen 19 entweder relativ zu den Wangen 17 drehfest, aber zum Auge 18 drehbar oder relativ zum Auge drehfest aber drehbar zu den Wangen 17 ist.

Auf dem Aussenumfang 20 der Kettenräder 5, 6 sind radial abstehende Mitnehmer 21 ausgebildet, die an ihrem radial aussenliegenden Ende jeweils eine Ausnehmung 22 tragen. Es sind jeweils in Richtung der Drehachsen 3 bzw. 4 hintereinander zwei derartige Mitnehmer 21 vorgesehen, deren lichter Abstand voneinander etwas grösser ist als der Abstand der beiden Wangen 17, die an jedem Kolben 13 ausgebildet sind. Diese Ausnehmungen 22 dienen zur Aufnahme der überstehenden Bereiche des Gelenkbolzens 19, wodurch die Förderung der endlosen Kolbenkette 10 bewirkt wird. Der radiale Abstand der jeweiligen Ausnehmung 22 vom Aussenumfang 20 jedes Kettenrades 5 bzw. 6 ist derart, dass die Kolben 13 frei vom jeweiligen Aussenumfang 20 des entsprechenden Kettenrades 5, 6 sind.

Die in Förderrichtung 14 jeweils vorn liegenden Förderflächen 23 der Kolben 13 sind napfartig ausgebildet, d.h. die verhältnismässig scharfkantig, d.h. schneidenartig ausgebildeten Aussenränder 24 der Kolben 13 zeigen im wesentlichen in Förderrichtung 14. Hierdurch wird bewirkt, dass die Förderflächen 23 der Kolben 13 im Bereich des jeweiligen Aussenrandes 24 eine das zu fördernde Material von der Innenwand 25 des Rohres 8 bzw. 9 abhebende Wirkung haben, wodurch die mechanische Förderenergie stark reduziert wird. Ausserdem werden Verklemmungen oder Verkeilungen weitgehend vermieden. Ausserdem werden durch die Aussenränder 24 einerseits und die Innenwand 25 andererseits genau definierte Leck-Spalte 26 geschaffen.

Zwischen zwei jeweils benachbarten Kolben 13 wird eine entsprechend der Bewegung der Kolbenkette 10 wandernde Kolbenkammer 27 gebildet, deren Länge a durch den Abstand der Aussenränder 24 der beiden benachbarten Kolben 13 bestimmt ist. Der Abstand a liegt im Bereich des doppelten bis dreifachen Rohrdurchmessers D. Etwa in der Mitte des Rohres 8 mündet in diesen eine Hochdruck-Dampfleitung 28 ein. In Förderrichtung 14 gesehen stromabwärts mündet aus dem Rohr 8 eine Dampf-Entnahmeleitung 29 aus. Um eine gleichmässige Dampfentnahme zu erreichen, ist an dieser Stelle um das Rohr 8 herum ein nach aussen dampfdichter Ringraum 30 angebracht, der über eine Vielzahl von Löchern 31 mit dem Innenraum des Rohres 8 in Verbindung steht. Der Querschnitt dieser Löcher 31 ist kleiner als der Querschnitt der kleinsten eingesetzten Materialkörner, so dass diese Löcher 31 wie ein Filter wirken. Die an diesen Ringraum 30 angeschlossene Dampf-Entnahmeleitung 29 ist entgegen der Förderrichtung 14 zurückgeführt und mündet stromaufwärts von der Einmündung der Hochdruck-Dampfleitung 28 mit einer Vorwärmdampf-Einmündung 32 in das Rohr 8. Der Abstand b zwischen der Einmündung der Hochdruck-Dampfleitung 28 und der Ausmündung der Dampf-Entnahmeleitung 29 ist auf jeden Fall etwas grösser als die Länge a einer Kolbenkammer 27, damit ein Kurzschluss zwischen der Hochdruck-Dampfleitung 28 und der Dampf-Entnahmeleitung 29 vermieden wird. Gleiches gilt für den zweckmässigerweise gleichen Abstand b zwischen der Einmündung der Hochdruck-Dampfleitung 28 und der Vorwärmdampf-Einmündung 32.

Um eine Entspannung und damit schnelle Abkühlung und gleichermassen Energierückgewinnung durch Dampfrückführung in mehreren Stufen zu erreichen, ist weiter stromabwärts im Abstand c von der Einmündung der Hochdruck-Dampfleitung 28 eine Dampf-Entnahmeleitung 33 an das Rohr 8 angeschlossen, die im Abstand c stromaufwärts von der Einmündung der Hochdruck-Dampfleitung 28 an einer Vorwärmdampf-Einmündung 34 wieder in das Rohr einmündet. Der Abstand c ist etwas grösser als ein Mehrfaches der Länge a einer Kolbenkammer. Aufgrund der Anordnung der Dampf-Entnahmeleitungen 29 und 33 symmetrisch zur Zuführung der Hochdruck-Dampfleitung 28 ist die endlose Kolbenkette 10 in Förderrichtung 14 druckausgeglichen, was zu einer erheblichen Reduktion der für den Antrieb der Kettenräder über die Antriebswelle 35 erforderlichen Drehmomente führt.

Gleicherweise symmetrisch zur Einmündungsstelle der Hochdruck-Dampfleitung 28 können weitere in der Zeichnung nicht dargestellte – Dampf-Entnahmeleitungen angeordnet sein.

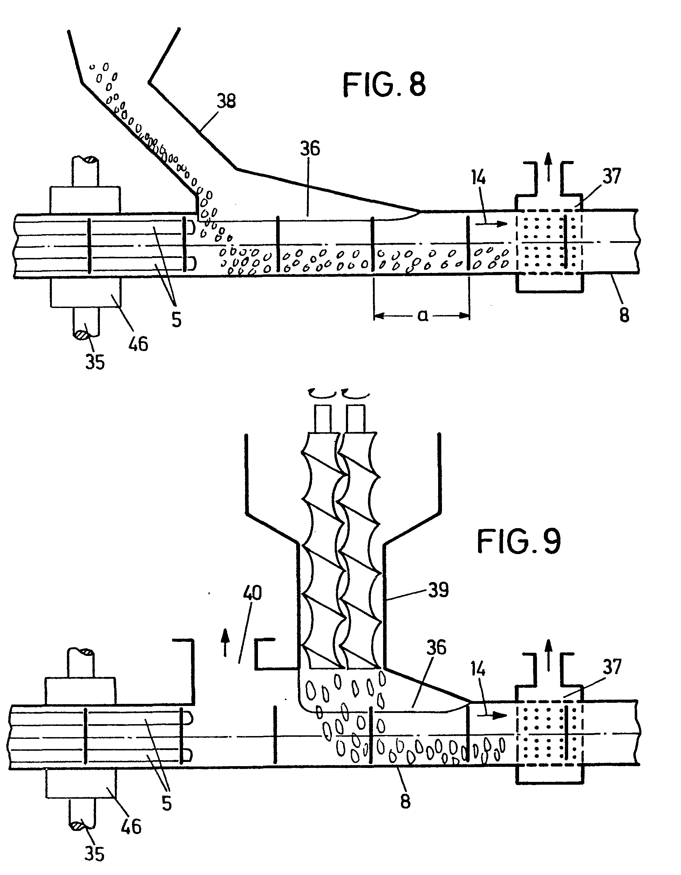

Am – in Förderrichtung 14 gesehen – Anfang des Rohres 8 ist eine Material-Eingabeöffnung 36 ausgebildet, die gemäss der detaillierteren Darstellung in Fig. 8 sich zur Erzielung einer möglichst gleichmässigen Materialeingabe in Längsrichtung des Rohres 8 über die Länge mehrerer Kolbenkammern 27 erstrecken kann. Stromabwärts von der Material-Eingabeöffnung 36 ist eine Abdampföffnung 37 vorgesehen, die ähnlich oder gleich der Ausmündung der Dampf-Entnahmeleitung 29 ausgebildet sein kann. Der Leckagedampf wird hier vollständig abgezogen, so dass dem durch die Material-Eingabeöffnung 36 einströmenden, rieselfähigen Material kein Dampf mehr entgegenströmt, d.h. es wird in einer drucklosen Zone zugegeben. Naturgemäss ist der Abstand zwischen der Abdampföffnung 37 und der Material-Eingabeöffnung 36 mindestens etwas grösser als die Länge a, um einen Dampf-Kurzschluss zu vermeiden. Bei der Ausgestaltung nach Fig. 8 für die Zugabe von rieselfähigem Material ist der Material-Eingabeöffnung 36 ein nach Art einer Rutsche ausgebildetes Zugaberohr 38 vorgeordnet.

In Fig. 9 ist eine Alternative für die Zugabe von nichtrieselfähigem Material, wie z.B. Papierschnitzel, dargestellt. Hierbei wird dieses nichtrieselfähige Material mittels einer gleichsinnig angetriebenen als Stopf- und Dosierschnecke 39 dienenden Doppelschnecke in das Rohr 8 eingetragen. Eventuell noch in den Bereich der Material-Eingabeöffnung 36 dringender Leckagedampf, der also nicht durch die Abdampföffnung 37 abgezogen wird, wird dann durch eine zusätzliche Leckagedampf-Öffnung 40 abgezogen.

Am – in Förderrichtung 14 gesehen – hinteren Ende des Rohres 8 ist eine Material-Austragsöffnung 41 an dem Rohr 8 vorgesehen, die unmittelbar vor dem zugeordneten Kettenrad 6 angeordnet ist. Von dieser Material-Austragsöffnung 41 führt ein Trichter 42 zu einem Dampf-Flüssigkeitsabscheider 43. Das auszutragende Material wird mittels zahlreicher Hochdruck-Düsen 44, die gegenüber der Material-Austragsöffnung 41 angeordnet sind, mit einer Glukoseextraktionsflüssigkeit von der endlosen Kolbenkette 10 abgespritzt und abgewaschen. Gleichzeitig wird der bis zur Material-Austragsöffnung 41 gelangende Leckagedampfstrom als Transportmedium für den Material-Austrag über den Trichter 42 benutzt. Anschliessend erfolgt dann in dem Dampf-Flüssigkeitsabscheider 43 die Trennung von Material und Dampf. Über den Kettenrädern 5, 6 sind Abdeckungen 45 angebracht, die in etwa dem Querschnitt der Rohre 8, 9 entsprechen, so dass auch bei einem Bruch der endlosen Kolbenkette 10 eine feste Führung auf den Kettenrädern 5, 6 erfolgt, d.h. dass die Kettenglieder 11 nicht explosionsartig aus dem entsprechenden Rohr 8 oder 9 herausfliegen können. An diesen Abdeckungen 45 sind auch Dichtungs- und Lagergehäuse 46 für die Wellen der Kettenräder 5, 6, insgbesondere also auch die Antriebswelle 35 angebracht.

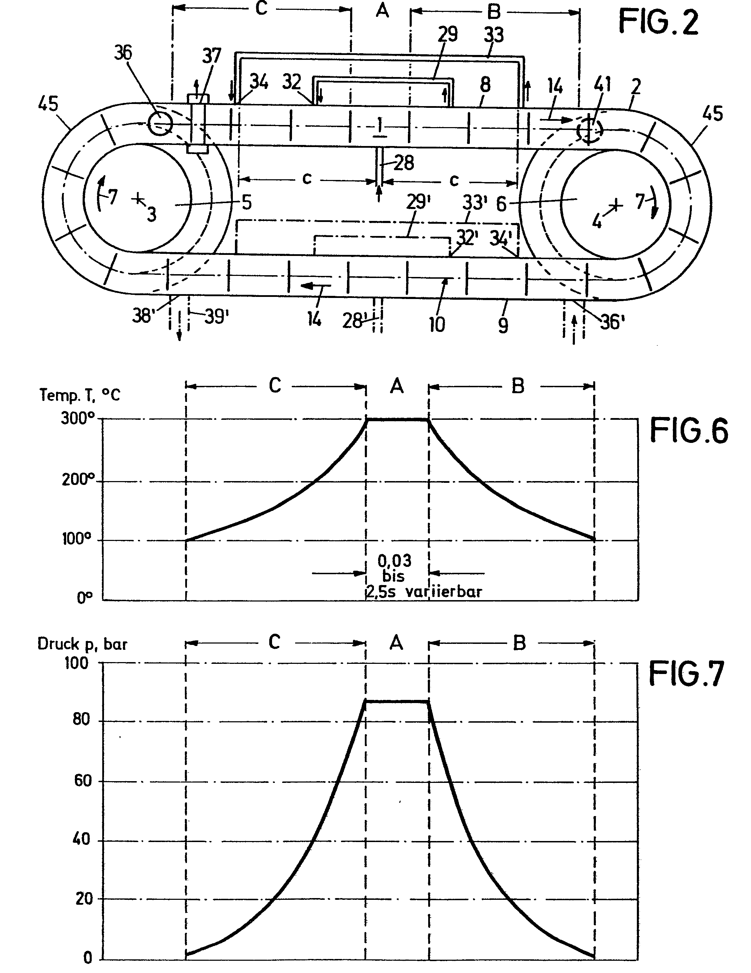

Das in Fig. 2 als unteres Rohr 9 dargestellte Rohr kann in gleicher Weise ausgestaltet sein wie das obere Rohr 8. Die entsprechenden Teile sind lediglich strichpunktiert dargestellt und die Bezugsziffern jeweils mit einem hochgestellten Strich versehen worden. Von einer erneuten konstruktiven Beschreibung kann daher Abstand genommen werden.

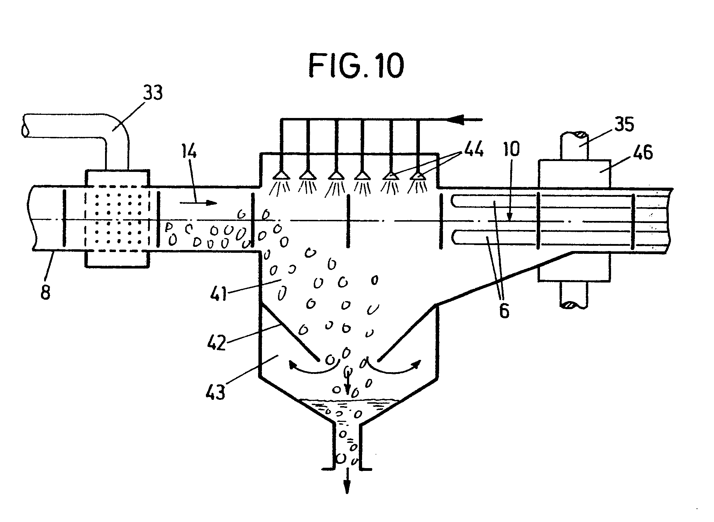

Der guten Ordnung halber sei darauf hingewiesen, dass aus konstruktiven Gründen in der Regel die beiden Rohre 8, 9 in einer gemeinsamen horizontalen Ebene angeordnet werden, so dass also die Drehachsen 3, 4 der Kettenräder 5, 6 vertikal stehen, wie dies in den Fig. 8 bis 10 angedeutet ist. Der Begriff oberes Rohr 8 und unteres Rohr 9 ist daher lediglich im Hinblick auf die zeichnerische Darstellung in Fig. 2 zu verstehen.

In dem geschilderten Rohrreaktor wird das nachfolgend erläuterte Hydrolyse-Verfahren ausgeführt.

Das der Material-Eingabeöffnung 36 in Fig. 8 und 9 zugeführte zellulosehaltige Material wird vor der Zuführung wie folgt vorbehandelt:

Zuerst wird das Rohmaterial, z.B. Holz, mechanisch auf eine Korngrösse von höchstens 10 mm zerkleinert; bevorzugt sind aber wesentlich kleinere Korngrössen unter 1 mm.

Anschliessend wird dieses zerkleinerte Rohmaterial in verdünnter Schwefelsäure mit einem Anteil von 0,5 bis 2,0 Gew.-% $H_2SO_4$ imprägniert, wobei diese Imprägnierung bevorzugt unter Vakuum vorgenommen wird, damit die im Rohmaterial eingeschlossene Luft entweichen kann. Durch die Säureimprägnierung wird $H_2SO_4$ als Katalysator homogen in der zu spaltenden Zellulose verteilt.

Im Anschluss daran wird das gesamte überschüssige Wasser in einer Zentrifuge oder Seihpresse abgetrennt, um den Feuchtegehalt des einzusetzenden Materials wegen der damit verbundenen Heizdampfeinsparung möglichst gering zu halten.

Das so entwässerte und bereits imprägnierte Rohmaterial wird nun mittels Abdampf bereits von 100 °C und einem Sattdampfdruck von 1 bar von Raumtemperatur auf etwa 100 °C aufgeheizt. Hierzu wird der aus dem Rohrreaktor abgezogene Abdampf eingesetzt.

Das so vorbehandelte Rohmaterial kann bei der erwähnten Temperatur von 100 °C und einer Verweilzeit von mehreren Stunden vorhydrolysiert werden, so dass aus der Hemizellulose noch wertvolle Produkte wie Xylose, Glukose, Methanol, Furfural und andere gewonnen werden können. Der α-Zellulose-Anteil bleibt aber bei einer solchen Vorhydrolisierung unverändert. Diese Vorbehandlung des Rohstoffes ist aus den DE-A 16 42 534, DE-A-26 47 910 und DE-A-28 27 388 her bekannt. Das in dieser Weise vorhydrolisierte oder ohne diese Vorhydrolyse vorbehandelte Rohmaterial wird dann in entwässerter Form über die Material-Eingabeöffnung 36 in den Rohrreaktor 1 eingegeben.

Die eine Kolbenkammer 27, die jeweils den Einlass der Hochdruck-Dampfleitung 28 überdeckt, begrenzt die Hydrolyse-Zone A, in die Hochdruck-Sattdampf mit einer Temperatur von etwa 300 °C und einem Druck von ca. 90 bar (siehe Fig. 6 und 7) eingeblasen wird, wodurch gleichzeitig eine intensive Durchwirbelung der in dieser Kolbenkammer 27 befindlichen Materialien bewirkt wird. Entsprechend der doppelten Länge a der Kolbenkammer 27 und der Geschwindigkeit der endlosen Kolbenkette 10 ergibt sich eine Verweilzeit des Materials in der Hydrolysezone A, die kleiner als 2,5 s, bevorzugt aber 0,03 bis 0,1 s (siehe hierzu Fig. 1) sein soll. Es wird Sattdampf, also nicht überhitzter Dampf, eingesetzt, da dieser bereits mit dem Einströmen in die Hydrolyse grösstenteils kondensiert, wodurch maximal mögliche Wärmeübergangswerte zum einzelnen Materialkorn hergestellt werden. In Förderrichtung 14 gesehen schliesst sich an die Hydrolysezone A die Entspannungszone B an, da unmittelbar nach Verlassen der Hydrolysezone A die vorstehend angesprochene Kolbenkammer 27 in Überdeckung mit der Dampf-Entnahmeleitung 29 kommt, so dass der in dieser Kammer befindliche Dampf zumindest teilweise abströmen kann und stromaufwärts geleitet wird, wo er in der sich von der Material-Eingabeöffnung 36 bzw. der Abdampföffnung 37 bis zur Hydrolysezone A erstreckenden Aufheizzone C als Vorwärmdampf in das Rohr 8 eingeführt wird. Gleiches geschieht auf einem niedrigeren Druck- und Temperaturniveau bei der Einmündung der nächsten Dampf-Entnahmeleitung 33. Weiterhin strömen durch die Leck-Spalte 26 zwischen den Aussenrändern 24 der Kolben 13 und der zugeordneten Innenwand 25 des Rohres 8 Leckage-Dampfströme. Das Verhältnis der Drücke in zwei benachbarten Kolbenkammern 27 beträgt hierbei jeweils etwa 2. Daraus resultierend ergibt sich – in Förderrichtung 14 gesehen – ein parabolisches Ansteigen der Temperatur T in der Aufheizzone von 100 °C auf 300 °C und ein parabolisches Ansteigen des Druckes p von 1 bar auf etwa 90 bar. Der Druck- und Temperaturabfall in der Entspannungszone B verläuft etwa spiegelsymmetrisch hierzu.

Wenn die Zahl der zur Dampfrückführung dienenden Entnahmeleitungen möglichst gross gemacht wird und die Leck-Spalte 26 sehr klein gemacht werden, dann strömt nur ein sehr kleiner Teil des Dampfes zur Abdampföffnung 37, so dass der Bedarf an Hochdruckdampf relativ verkleinert wird. Der aus der Material-Austragsöffnung 41 noch entweichende Dampf wird zur Vorwärmung des Rohmaterials von Raumtemperatur auf 100 °C verwendet.

Bei vollständigem Dampfrecycling kann ein Frischdampfbedarf von 0,17 kg/kg feuchtem Material bzw. 0,47 kg/kg trockenem Material bei einer anfänglichen Feuchte von 50% erreicht werden. Eine Dampfeinsparung wird demnach sowohl durch die Rückführung von entspanntem Dampf als auch dadurch erreicht, dass das zu hydrolysierende Material mit einer geringen Anfangsfeuchte eingesetzt wird.

Da die Kolbenkette 10 in der gesamten aus Aufheizzone C, Hydrolysezone A und Entspannungszone B bestehenden Reaktionszone druckausgeglichen ist, sind die erforderlichen mechanischen Antriebskräfte relativ gering. Die aufzubringende Antriebsenergie beträgt etwa 0,01 × 3,6 Mt/kg Material, während bei den in der Praxis bekannten Verfahren 0,1 bis 0,2 × 3,6 Mt/kg Material notwendig sind.

Durch die sehr starke Druckentlastung unmittelbar am Ende der Hydrolysezone A tritt auch eine schlagartige Abkühlung des Materials ein, so dass keine weitere Reaktion eintreten kann. Die hohen Kettengeschwindigkeiten von 0,3 bis 1,5 m/s, bevorzugt von etwa 1 m/s ermöglichen es, dass das Rohr 8 einen relativ kleinen Durchmesser hat. Für eine Durchsatzleistung von 10 t/h trockenem Holz beträgt der Kolbendurchmesser etwa 160 mm, die Kolbenkammerlänge 320 mm und die Rohrlänge ca. 4 m. Da die Breite der Leck-Spalte 26 im Bereich von 1 bis 2 mm oder sogar darüber liegen können, ist eine preiswerte Fertigung der Kolben 13 möglich.

Lediglich die Kettenglieder 11 werden bei ihrem Umlauf veränderlichen Temperaturen ausgesetzt; im Rohr 8 bildet sich dagegen ein weitgehend stationäres Temperaturprofil aus, so dass das Rohr 8 im Bereich seiner Innenwand 25 beispielsweise mit einer säurefesten Auskleidung aus Keramik oder Stein versehen sein kann, da ja aufgrund der Leck-Spalte 26 und der Spannung der endlosen Kolbenkette 10 aufgrund des Dampfdruckprofils nur eine sehr geringe Reibung zwischen Kolben 13 und Innenwand 25 bzw. Auskleidung vorhanden ist.

Das untere Rohr 9 lässt sich anstelle einer zweiten Reaktionszone auch für die Durchführung eines weiteren vorbereitenden Verfahrens einsetzen, nämlich das Aufsprengen von Holzschnitzeln zum besseren inneren Aufschluss für die nachfolgende Hydrolyse im oberen Rohr 8. Feuchte Holzschnitzel werden über die gesamte Reaktorlänge mit Sattdampf von höherem Druck bis etwa 10 bar bis zur völligen Temperaturhomogenität, d.h. bis zur gleichmässigen Aufheizung, beaufschlagt, wobei Druck, Temperatur und Verweilzeit derart sein müssen, dass noch keine nennenswerte Hydrolysereaktion einsetzt. Wenn dann schlagartig eine Druckentspannung am Austrag auf 1 bar, d.h. Atmosphärendruck, durchgeführt wird, dann reisst das Holzgefüge so weit auf, dass bei der anschliessenden – zuvor beschriebenen – Hydrolysereaktion im oberen Rohr 8 der Hochdruckdampf einen sehr viel leichteren und schnelleren Zugang zur Zellulose erhält. Dieser Behandlungsvorgang benötigt allerdings zusätzlichen Dampf. Zu bevorzugen ist daher ein Einsatz von Rohmaterial mit relativ geringer Korngrösse, die z.B. durch Mahlen erzielt wird.

Am Ende der Entspannungszone B wird das hydrolysierte Material durch die Material-Austragsöffnung 41 ausgetragen. Die gebildete Glukose wird mittels leicht alkalischem, heissem Waschwasser aus dem Material extrahiert, was z.B. aus der DE-A-27 44 067 bekannt ist. Die Extraktionsflüssigkeit bietet sich auch zum Sauberspritzen der Kolbenkammern 27 an.

**Patentansprüche**

1. Verfahren zur Hydrolyse von Zellulose pflanzlicher Rohstoffe zu Glukose, insbesondere unter Einsatz von Holz als Rohstoff, wobei der Rohstoff zerkleinert, mit Säure imprägniert und bei einer Temperatur von über 250 °C mittels Hochdruck-Dampf hydrolysiert wird, dadurch gekennzeichnet, dass der mit verdünnter Säure imprägnierte, feinstzerkleinerte Rohstoff jeweils portionsweise durch die Hydrolysezone gefördert wird, in der es mittels des Hochdruck-Dampfes in extrem kurzer Zeit unter plötzlicher Druckerhöhung für eine Zeitdauer von maximal 2,5 s auf die Hydrolysetemperatur aufgeheizt wird.

2. Verfahren nach Patentanspruch 1, dadurch gekennzeichnet, dass Sattdampf in die Hydrolysezone eingeblasen wird.

3. Verfahren nach Patentanspruch 1 und 2, dadurch gekennzeichnet, dass der Sattdampf 0,03 bis 0,1 s auf den Rohstoff einwirkt.

4. Verfahren nach Patentanspruch 1 oder 2, dadurch gekennzeichnet, dass hinter der Hydrolysezone eine sehr schnelle Temperatur- und Druckabsenkung durch Dampfentnahme erfolgt.

5. Verfahren nach Patentanspruch 4, dadurch gekennzeichnet, dass der Entnahmedampf in Förderrichtung des Rohstoffes gesehen vor der Hydrolysezone zur Aufheizung des Rohstoffes eingesetzt wird.

6. Verfahren nach einem der Patentansprüche 1 bis 4, dadurch gekennzeichnet, dass Leckage-Dampf zur Vorwärmung des Materials eingesetzt wird.

7. Verfahren nach einem der Patentansprüche 1 bis 6 unter Einsatz von Holzschnitzeln, dadurch gekennzeichnet, dass die Holzschnitzel in feuchtem Zustand einer Dampfbehandlung bei etwa 5 bis 10 bar bis zur völligen Temperaturhomogenität ausgesetzt und dann schlagartig auf Atmosphärendruck entspannt werden.

8. Vorrichtung zur Durchführung des Verfahrens nach einem der Patentansprüche 1 bis 7, dadurch gekennzeichnet, dass sie als Rohrreaktor (1) ausgebildet ist, der ein gerade gestrecktes Rohr (8, 9) aufweist, durch das eine endlose Kolbenkette (10) transportierbar ist, deren Kolben (13) gegenüber der Innenwand (25) des Rohres (8, 9) jeweils einen Leck-Spalt (26) bilden und wobei jeweils zwei benachbarte Kolben (13) eine Kolbenkammer (27) begrenzen, und dass etwa in der Mitte des Rohres (8) eine Hochdruck-Dampfleitung 28) einmündet.

9. Vorrichtung nach Patentanspruch 8, dadurch gekennzeichnet, dass in einem Abstand (b) der mindestens etwas grösser ist als die Länge (a) einer Kolbenkammer (27) eine Dampf-Entnahmeleitung (29) aus dem Rohr (8) ausmündet, die bis zu einer – in Förderrichtung (14) gesehen etwa im gleichen Abstand (b) vor der Einmündung der Dampfleitung (28) angeordneten – Vorwärmdampf-Einmündung (32) in das Rohr (8) zurückgeführt ist.

10. Vorrichtung nach Patentanspruch 9, dadurch gekennzeichnet, dass symmetrisch zu der Einmündung der Hochdruck-Dampfleitung (28) mehrere Entnahmedampf-Rückführungen vorgesehen sind.

11. Vorrichtung nach einem der Patentansprüche 8 bis 10, dadurch gekennzeichnet, dass die Förderflächen (23) der Kolben (13) napfartig gewölbt mit in Förderrichtung (14) weisenden Aussenrändern (24) ausgebildet sind.

**Revendications**

1. Procédé pour l'hydrolyse en glucose de la cellulose de matières premières végétales, notamment en utilisant du bois en tant que matière première, la matière première étant fractionnée, imprégnée avec de l'acide et hydrolysée à une tempérérature supérieure à 250 °C au moyen de vapeur à haute pression, caractérisé en ce que la matière première finement fractionnée, imprégnée d'acide dilué, est transportée chaque fois par parties à travers la zone d'hydrolyse, dans laquelle elle est chauffée à la température d'hydrolyse au moyen de la vapeur à haute pression dans un temps extrêmement court avec une brusque élévation de pression pendant une durée maximum d'au moins 2,5 s.

2. Procédé selon la revendication 1, caractérisé en ce que de la vapeur saturée est soufflée dans la zone d'hydrolyse.

3. Procédé selon les revendications 1 et 2, caractérisé en ce que la vapeur saturée agit pendant 0,03 à 0,1 s sur la matière première.

4. Procédé selon la revendication 1 ou 2, caractérisé en ce qu'après la zone d'hydrolyse, une chute de température et de pression très rapide a lieu par prélèvement de vapeur.

5. Procédé selon la revendication 4, caractérisé en ce que la vapeur prélevée est utilisée pour le chauffage de la matière première avant la zone d'hydrolyse en considérant le sens de transport de la matière première.

6. Procédé selon l'une des revendications 1 à 4, caractérisé en ce que la vapeur de fruite est utilisée pour le préchauffage de la matière.

7. Procédé selon l'une des revendications 1 à 6, avec utilisation de copeaux de bois, caractérisé en ce que les copeaux de bois sont soumis à l'étant humide à un traitement par la vapeur à 5 à 10 bars environ jusqu'à une température complètement homogène et sont ensuite détendus brusquement à la pression atmosphérique.

8. Dispositif pour la mise en oeuvre du procédé selon l'une des revendications 1 à 7, caractérisé en ce qu'il est agencé en tant que réacteur tubulaire (1), comportant un tube (8, 9) allongé et rectiligne à travers lequel peut être transportée une chaine à pistons sans fin (10), dont les pistons (13) forment chacun un intervalle de fuite (26) par rapport à la paroi intérieure (25) du tube (8, 9) deux pistons (13) voisins délimitant à chaque fois une chambre de pistons (27), et en ce qu'une conduite de vapeur à haute pression (28) débouche sensiblement au milieu du tube (8).

9. Dispositif selon la revendication 8, caractérisé en ce qu'une conduite de prélèvement de vapeur (29) débouche hors du tube (8) à une distance (b) qui est au moins sensiblement aussi grande que la longueur (a) d'une chambre de pistons (27), cette conduite étant ramenée dans le tube (8) jusqu'à une embouchure (32) de vapeur de préchauffage disposée, en considérant le sens de transport (14) à peu prés à la même distance (b) en amont de l'embouchure de la conduite de vapeur (28).

10. Dispositif selon la revendication 9, caractérisé en ce que plusieurs prélèvements de vapeur-retours sont prévus symétriquement à l'embouchure de la conduite de vapeur à haute pression (28).

11. Dispositif selon l'une revendications 8 à 10, caractérisé en ce que les surfaces de transport (23) des pistons (13) sont réalisées incurvées en forme d'auges avec des bords extérieurs (24) dirigés dans le sens de transport (14).

## Claims

1. Method of hydrolyzing cellulose of vegetable raw materials to form glucose, particularly using wood as the material, the raw material being comminuted, impregnated with acid and hydrolyzed at a temperature of over 250 °C by means of high-pressure steam, characterised in that the very finely comminuted raw material, which is impregnated with dilute acid, is conveyed one portion at a time through the hydrolysis zone in which it is heated to the hydrolysis temperature by means of the high-pressure steam in a extremely short time while there is a sudden increase in pressure for a maximum period of 2,5 seconds.

2. Method according to Claim 1, characterised in that saturated steam is blown into the hydrolysis zone.

3. Method according to Claims 1 and 2, characterised in that the saturated steam acts upon the raw material for 0.03 to 0.1 seconds.

4. Method according to Claim 1 or 2, characterised in that, behind the hydrolysis zone, a very reduction in temperature and pressurs is effected by steam extraction.

5. Method according to Claim 4, characterised in that, when seen in the conveying direction of the raw material, the extraction steam is used to heat the raw material in front of the hydrolysis zone.

6. Method according to any one of Claims 1 to 4, characterised in that leakage steam is used to preheat the material.

7. Method according to any one of Claims 1 to 6 using wood chips, characterised in that the wood chips are subjected, when in a moist state, to steam treatment at a pressure of approximately 5 to 10 bars until a fully uniform temperature is reached, and then suddenly reduced to atmospheric pressure.

8. Apparatus for carrying out the method according to any one of Claims 1 to 7, characterised in that it is in the form of a tubular reactor (1) comprising a straight elongated tube (8, 9) through which a chain (10) of pistons can be transported, each of which pistons (13) forms a leakage gap (26) opposite the inner wall (25) of the tube (8, 9) and each pair of adjacent pistons (13) defining a pistons chamber (27), and that a high-pressure steam line (28) leads approximately into the centre of the tube (8).

9. Apparatus according to claim 8, characterised in that a steam extraction line (29) leads out of the tube (8) within a distance (b), which is at least slightly greater than the length (a) of a piston chamber (27), the said steam extraction line leading back into the tube (8) as far as a preheated steam opening (32) – which, when seen in the conveying direction (14), is arranged ahead of the opening of the steam line (28) by approximately the same distance (b).

10. Apparatus according to Claim 9, characterised in that a plurality of extraction steam return lines are provided symmetrically with the opening to the high-pressure steam line (28).

11. Apparatus according to any one of Claims 8 to 10, characterised in that the conveying surfaces (23) of the pistons (13) are, in design, curved like a bowl with outer edges (24) pointing in the conveying direction (14).

FIG.1

0 054 871

1/6

FIG. 2

FIG. 6

FIG. 7

FIG. 3

**FIG. 4**

**FIG. 5**

FIG. 8

38

36

14

37

a

8

5

46

35

FIG. 9

40

39

36

14

37

8

5

46

35

# FIG.10